# EUROPÄISCHE PATENTSCHRIFT

(11) **EP 1 464 990 B1**
(45) Veröffentlichungstag und Bekanntmachung des Hinweises auf die Patenterteilung: **02.10.2019**
(21) Anmeldenummer: 04405081.3
(22) Anmeldetag: 11.02.2004
(51) Int. Cl.: G01S 17/74

(54) **MODULIERBARER REFLEKTOR**
MODULATABLE REFLECTOR
REFLECTEUR MODULABLE

(30) Priorität: 31.03.2003 CH 20030558
(43) Veröffentlichungstag der Anmeldung: 06.10.2004
(73) Patentinhaber: RUAG Electronics, 3014 Bern (CH)
(72) Erfinder: Kubaink, Joachim, 3006 Bern (CH)
(74) Vertreter: AMMANN PATENTANWÄLTE AG BERN

(56) Entgegenhaltungen:
- WO-A1-02/096015
- DE-A- 2 453 077
- FR-A- 2 438 275
- US-A- 4 983 021
- US-A- 5 432 123
- GILBREATH G C ET AL: "Retromodulator for optical tagging for LEO consumables", AEROSPACE CONFERENCE, 2001, IEEE PROCEEDINGS. MAR. 10-17, 2001', PISCATAWAY, NJ, USA,IEEE, PISCATAWAY, NJ, USA, vol. 3, 20 March 2001 (2001-03-20), pages 1531-1539, XP010548380, ISBN: 978-0-7803-6599-5

## Beschreibung

Die vorliegende Erfindung bezieht sich auf einen modulierbaren Reflektor für elektromagnetische Strahlungsenergie, insbesondere Licht, gemäss Oberbegriff des Anspruches 1.

In der folgenden Beschreibung wird stellvertretend für elektromagnetische Strahlungsenergieformen von Licht gesprochen, das die bevorzugt betrachtete Energieform darstellt. Andere Strahlungsenergieformen mit ähnlichen Ausbreitungs- und Reflexionseigenschaften, die mit dem beschriebenen modulierbaren Reflektoren reflektiert und moduliert werden können, sind damit grundsätzlich umfasst.

Eine bekannte Form von Reflektoren für Licht sind Prismen und insbesondere Tripelprismen, die unter idealen Bedingungen Licht, das aus einer beliebigen Richtung einfällt, in einem parallelen Strahl reflektieren. Tripelprismen bestehen in der Regel aus einem zylindrischen Körper, an dessen einen Ende eine Spitze aus drei in einem Winkel von 90° zueinander stehenden Flächen gebildet wird. Mit anderen Worten ist ein Ende des Zylinders als dreiseitige Pyramide ausgebildet. Licht, das an der ebenen Fläche des anderen Endes in den Zylinder eintritt, wird durch Totalreflexion an den Flächen der Pyramide parallel zum eintretenden Strahl, aber in entgegengesetzter Richtung reflektiert. Voraussetzung für diesen Reflexionsprozess ist offensichtlich, dass das Tripelprisma aus einem optisch dichteren Material als die Umgebung besteht.

Einsatzgebiete finden derartige Prismen z.B. in Simulationssystemen für militärische Übungen, Freund-/Feinderkennung von Flugzeugen, aber auch bei anderen Anwendungen, in denen ein Objekt auf Anwesenheit geprüft und identifiziert werden muss. Für eine grosse Reichweite werden dabei Laserstrahlen eingesetzt, die ihre Umgebung abtasten, wobei ein von einem Tripelprisma reflektierter Strahl von einem in der Umgebung der Lichtquelle angeordneten Sensor erfasst wird.

Ein Ziel derartiger Installationen ist dabei, neben der Anwesenheit eines Objektes auch dessen Identität festzustellen. Eine Möglichkeit besteht darin, von einer übergeordneten Kontrolleinheit jederzeit die Position jedes Objektes zu verfolgen. Wird an einer bestimmten Position ein Objekt detektiert, so kann die Kontrolleinheit aus ihrer Kenntnis des Aufenthaltsorts jedes Objektes ermitteln, um welches Objekt es sich hierbei handelt. Nachteilig daran ist, dass eine totale Überwachung sämtlicher Objekte durch eine zentrale Einheit nötig ist, wodurch sich ein grosser Aufwand für die entsprechende Vernetzung und eine erhebliche Verzögerung bei der Detektierung ergeben.

Eine andere Möglichkeit besteht darin, dass der Reflektor den reflektierten Lichtstrahl moduliert und damit Informationen über das Objekt, an dem sich das Tripelprisma befindet, an den Sender zurückliefert. Hierdurch ergibt sich ein wesentlich verringerter Aufwand, eine einfachere Struktur des Gesamtsystems, da die beweglichen Objekte autark sind, und eine schnellere Identifizierbarkeit des jeweils gefundenen Objektes.

Ein derartiger Reflektor ist in der US-A-4,143,263 beschrieben. Darin ist vor dem Reflektor ein optischer Schalter angeordnet, wofür ein Flüssigkristallelement, ein piezokeramischer Modulator oder eine KHD-Zelle (KHD: Kaliumdihydrogenphosphat). US-A-4,249,265 schlägt eine mechanische Lösung vor mit einem Verschluss vor dem Reflektor. US-4,983,021 lehrt sowohl mechanische wie elektrooptische Modulatoren, z.B. mit LCD-Elementen.

Die genannten Lösungen zeigen jedoch jeweils Nachteile: sie sind entweder aufwendig, zeigen eine beschränkte Modulationstiefe oder schwächen den Lichtstrahl ab.

Es ist daher eine Aufgabe der Erfindung, eine andere Möglichkeit der Modulation eines von einem Reflektor reflektierten Lichtstrahls anzugeben.

Ein Reflektor, der diese Aufgabe löst, ist im Anspruch 1 angegeben. Die weiteren Ansprüche geben bevorzugte Ausführungsformen und Anwendungen an.

Demgemäss wird für die Modulation des Lichtstrahls ein photonisches Element mit steuerbaren photonischen Eigenschaften verwendet. Insbesondere erfolgt die Steuerung durch Anlegen einer elektrischen Spannung. Das photonische Element kann direkt im Strahlengang angeordnet werden oder optisch mit den Flächen gekoppelt werden, an denen der Lichtstrahl im Reflektor gebrochen und/oder reflektiert wird.

Als photonisches Element wird ein Element verstanden, das eine sogenannte photonische Bandlücke aufweist. Eine photonische Bandlücke zeichnet sich dadurch aus, dass Licht, dessen Wellenlänge bezw. Energie in der Bandlücke liegt, sich im photonischen Element nicht ausbreiten kann. Dieses Licht wird vom photonischen Element reflektiert, während es für anderes Licht transparent erscheint. Die Lage dieser Bandlücke kann durch geeignete Massnahmen steuerbar werden. Eine bekannte Massnahme besteht darin, das photonische Element mit einem nematischen und/oder ferroelektrischen Flüssigkristallmaterial zu durchsetzen. Bei Anlegen einer elektrischen Spannung ändern sich die optischen Eigenschaften des Flüssigkristalls, wobei auch die Bandlücke um eine, wenn auch geringe, Frequenz verschoben wird. Wegen der steilen Flanken der photonischen Bandlücke ist es trotzdem möglich, damit eine vollständige Durchstimmung des photonischen Kristalls zu erhalten, d. h. für eingestrahltes Licht einer Frequenz entsprechend der Bandlücke, insbesondere einen Laserstrahl einer solchen Frequenz, können die Eigenschaften des photonischen Elements von transparent auf reflektierend umgeschaltet werden.

Die Erfindung wird weiter an bevorzugten Ausführungsbeispielen unter Bezugnahmen auf Figuren erläutert.
- Fig. 1:: Schematisiertes Transmissionsdiagramm eines photonischen Materials;
- Fig. 2:: Schnitt durch ein primitives Prisma;
- Fig. 3:: Seitenansicht auf ein erfindungsgemässes Tripelprisma mit photonischem Element auf Reflexionsflächen;
- Fig. 4:: Ansicht von unten auf das Tripelprisma der Fig. 3;
- Fig. 5:: Schrägansicht eines erfindungsgemässen Tripelprismas mit photonischem Element im Strahlausgang;
- Fig. 6:: Ansicht von unten auf das Tripelprisma gemäss Fig. 5;
- Fig. 7:: Schrägansicht auf ein erfindungsgemässes Tripelprisma mit photonischem Element im Strahleingang;
- Fig. 8:: Ansicht von unten auf das Tripelprisma gemäss Fig. 7;
- Fig. 9:: Teilausschnitt durch die Ankopplung eines photonischen Elementes an ein Luftprisma;
- Fig. 10:: Teilausschnitt durch die Ankopplung eines photonischen Elementes an ein massives Prisma mit beidseitiger Abdeckung;
- Fig. 11:: Teilausschnitt durch die Ankopplung eines photonischen Elementes an ein massives Prisma mit einseitiger Abdeckung.

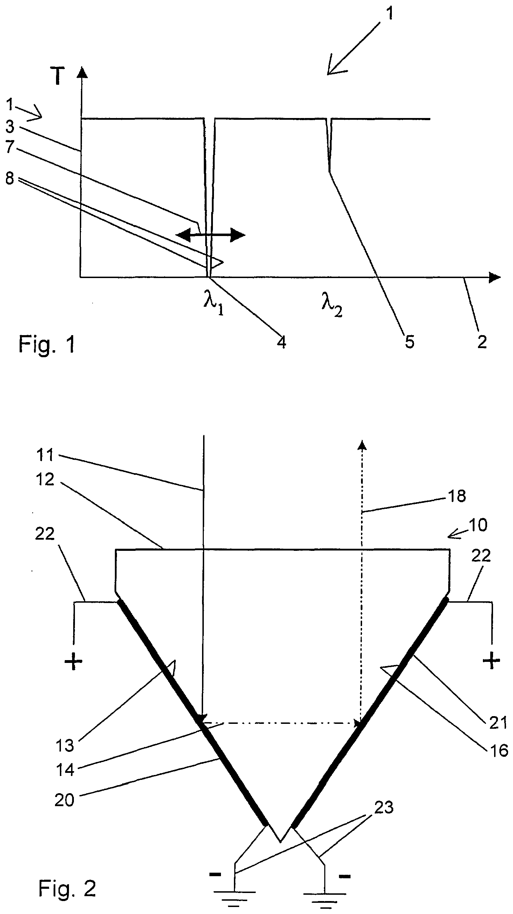

Fig. 1 zeigt schematisch das Transmissionsverhalten eines photonischen Elementes, wie es für die Ausführung der Erfindung vorgesehen ist. Auf der Abszisse ist die Wellenlänge aufgetragen, auf der Ordinate 3 die Durchlässigkeit T für die elektromagnetische Strahlungsenergie der jeweiligen Wellenlänge λ. Deutlich ist zu sehen, dass an bestimmten Stellen, nämlich den Bandlücken 4, 5 die Transmission T stark erniedrigt ist, bei der starken Bandlücke 4 sogar fast bis zur Undurchlässigkeit, was bei photonischen Elementen der Reflexion des einfallenden Strahls entspricht. Wie mit dem Doppelpfeil 7 angedeutet, kann eine Bandlücke, hier die Bandlücke 4, verschoben werden. Offensichtlich wird dabei das photonische Element für Strahlung der Wellenlänge λ₁ umgeschaltet zwischen transparent und reflektierend. Dabei kann diese Umschaltung auch dann bewirkt werden, wenn die Verschiebung 7 nur um einen Betrag in der Grössenordnung der Breite der Bandlücke 4 möglich ist, da die Flanken 8 der Bandlücke 4 sehr steil sind: es muss da nur die Wellenlänge λ₁ möglichst nahe an der entsprechenden Flanke 8 gewählt werden, so dass die Flanke 8 bei Verschiebung die Wellenlänge λ₁ überstreicht.

Die bekannten photonischen Elemente bestehen aus regelmässig angeordneten Zonen verschiedener optischer Dichte, z.B. aus entsprechenden Kristallstrukturen. Derartige Strukturen wurden ursprünglich nur eindimensional hergestellt, mittlerweile sind jedoch auch zweidimensionale und dreidimensionale photonische Strukturen realisierbar, wobei insbesondere letztere beide für die vorliegende Erfindung eingesetzt wird. Das photonische Material enthält Hohlräume, die für die Beeinflussung der Bandlücke mit einem geeigneten Material ausgefüllt werden können. Bekannt ist dabei für eine Beeinflussung durch elektrische Felder die Verwendung eines nematischen und ferroelektrischen Flüssigkristalls. Experimente haben gezeigt, dass damit eine Verschiebung der Bandlücke um 10² Hz, möglicherweise sogar bis 10⁶ Hz möglich ist. Die Modulationsfrequenz kann dabei bis mehrere 100 kHz betragen.

Für die angestrebte Funktion ist weiterhin Licht einer genau definierten Wellenlänge nötig. Derartige Lichtquellen stehen in Form von Laserlichtquellen heutzutage zur Verfügung. Insbesondere werden routinemässig Laserscanner bei der Simulation von Waffenwirkungen während Gefechtsübungen eingesetzt.

Fig. 2 zeigt einen Schnitt durch ein einfaches Prisma 10. Ein Lichtstrahl 11 tritt beispielsweise im Wesentlichen senkrecht zur Oberfläche 12 in das Prisma 10 ein, wird an der ersten schrägen Fläche 13 im rechten Winkel abgelenkt (Strahl 14) und an der zweiten Prismenfläche 16 nochmals um 90° in eine Richtung an die parallel zum einfallenden Lichtstrahl 11 abgelenkt. Danach tritt er als zurück reflektierter Lichtstrahl 18 wieder aus dem Prisma 10 aus.

Erfindungsgemäss werden in diesem Beispiel die Prismenflächen 13, 16 mit einem photonischen Material ausgestattet, hier angedeutet durch dicke Linien 20, 21. Da das photonische Material für elektromagnetische Strahlung (hier namentlich Licht) zwischen spiegelnd (reflektierend) und transparent umschaltbar ist, ist es damit möglich, für die Reflexion neben der Totalreflexion (Phasenübergang hohe optische Dichte zu niedrige optische Dichte) auch direkt den Spiegeleffekt auszunützen. Dabei würde z. B. das Prisma 10 im Wesentlichen nur aus den photonischen Flächen 20, 21 bestehen, also sozusagen ein Luftprisma vorliegen. Zum Schutz der photonischen Elemente 20, 21 wird jedoch bevorzugt das Prisma auch dann abgeschlossen, z. B. durch eine transparente Abdeckung 12.

Schematisch angegeben sind die Anschlüsse 22 (+) und 23 (-) für die Ansteuerung der photonischen Elemente 20, 21. Als Geräte für die Ansteuerung können z.B. solche verwendet werden, die für Flüssigkristallanzeigen bekannt sind. Auf eine detaillierte Beschreibung wird daher verzichtet.

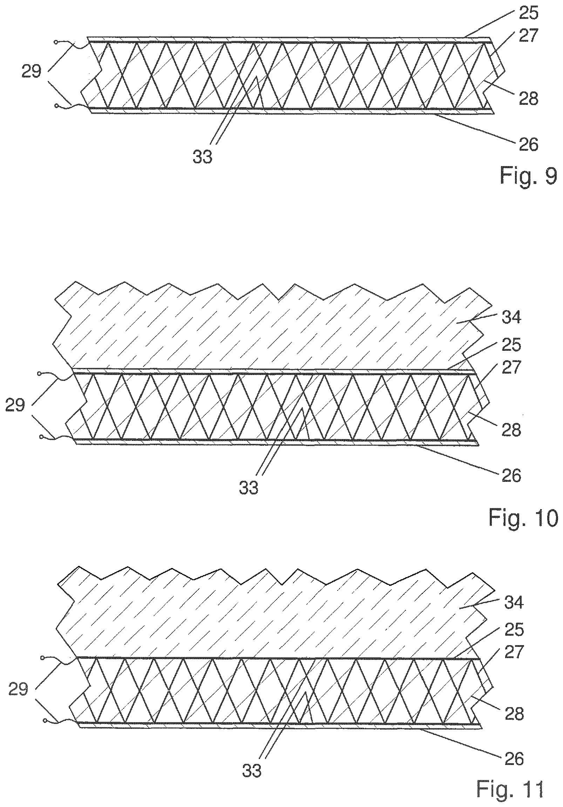

Fig. 9 zeigt einen Schnitt durch ein photonisches Element, das hierfür geeignet ist. Zwischen einer oberen Abdeckung 25 und einer unteren Abdeckung 26 befindet sich das photonische Material. Es besteht aus dem eigentlichen photonischen Material 27 und dem eingelagerten Flüssigkristall 28, der durch die Schraffierung angedeutet ist. Die obere und untere Abdeckung 25, 26 besteht z. B. aus Glas. Oberhalb der oberen Abdeckung 25 befindet sich das Innere des Hohl- oder Luftprismas.

Über die Leitungen 29 werden die nötigen Spannungen an die Elektroden 33 angelegt, die sich zwischen den Abdeckungen 25, 26 und dem photonischen Material 27 befinden. Über die Anschlüsse 29 wird die Spannung an die Elektroden 33 angelegt, um das Flüssigkristall 28 zu steuern und damit die photonische Lücke zu verschieben. Die Ansteuertechnik wie auch die Ausführung der Elektroden 33 kann z. B. aus der Technologie der Flüssigkristallanzeigen übernommen werden. Auf eine detaillierte Beschreibung kann daher verzichtet werden.

Fig. 10 zeigt im Prinzip das gleiche photonische Element wie in Fig. 9. Es grenzt hier jedoch an ein massives Prisma 34. Wichtig bei dieser Ausführung ist, dass in einem möglichst breiten Winkelbereich an der Phasengrenzfläche zwischen Prisma 30 und oberer Abdeckung 25 keine Totalreflexion auftritt, da sonst das photonische Element 27, 28 unwirksam ist.

Gemäss Fig. 11 kann auch das Prisma 34 selbst als obere Abdeckung 25 dienen. In diesem Fall grenzt das Prisma 34 direkt an das photonische Material 27, 28.

Die Verwendung photonischer Elemente zur Modulierung des Lichtstrahls, der von einem Tripelprisma zurückgeworfen wird, ist durch Anordnung des oder der photonischen Elemente an verschiedenen Orten des Tripelprismas oder RetroReflektors möglich.

Für die Beeinflussung des Flüssigkristalls wird auf an sich bekannte Art eine elektrische Spannung angelegt, z. B. Elektroden, die transparent ausgeführt sind, sind in den Figuren nicht dargestellt, da sie dem Fachmann an sich bekannt und je nach Anwendung verschieden ausgeführt sind.

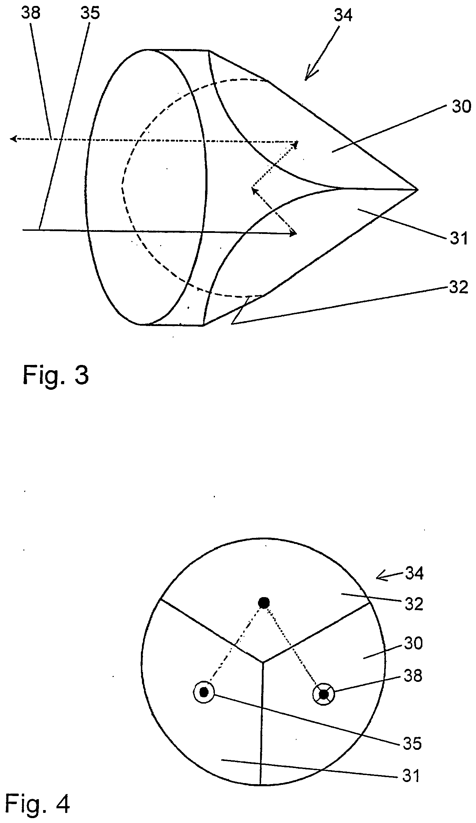

Die Figg. 3 und 4 zeigen die erste Möglichkeit, bei der die photonischen Elemente zugleich die Reflexionsflächen 30, 31, 32 des Tripelprismas 34 bilden. Zur Vereinfachung der Figur sind sie hier nicht besonders kenntlich gemacht. Die Flächen 30 bis 32 können ganz oder zu einem wesentlichen Teil vom photonischen Element gebildet oder abgedeckt sein. Da der Lichtstrahl in praktisch allen Fällen von jeder der drei Flächen reflektiert wird, ist es grundsätzlich auch denkbar, statt allen Flächen 30 bis 32 zwei oder sogar nur eine der Flächen mit einem photonischen Element auszustatten.

Der einfallende Lichtstrahl 35 gelangt auf die erste Reflexionsfläche 31 und wird hier durch das photonische Element, soweit vorhanden, zum ersten Mal moduliert. Er wird auf die zweite Fläche 32 reflektiert, wo gegebenenfalls eine zweite Modulation stattfinden kann. Von dort wird er auf die dritte Fläche 30 reflektiert, von der er antiparallel zum eintretenden Strahl 35 als Strahl 38 austritt. Maximal stehen damit bei dieser Ausführung drei Modulationsmöglichkeiten zur Verfügung, wodurch bis zu drei überlagerte Modulationen des Lichtstrahls 38 möglich sind.

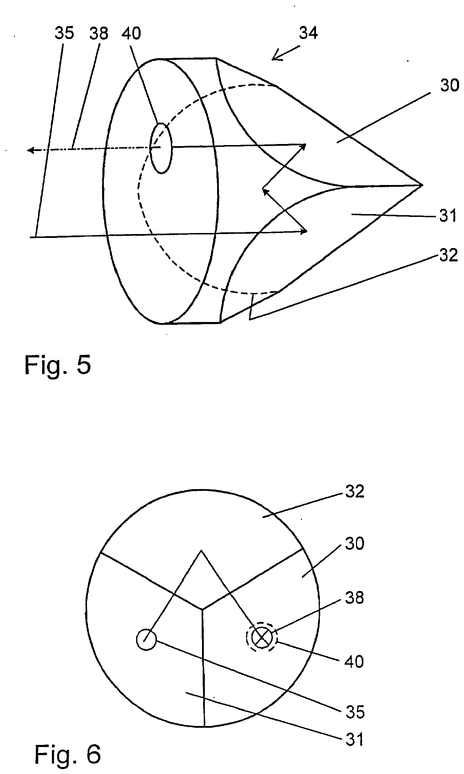

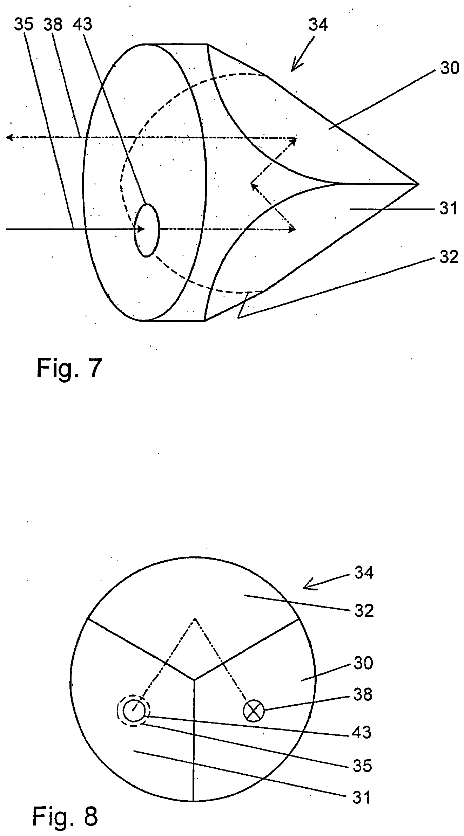

Die Figg. 5 und 6 zeigen eine andere Variante, bei der ein photonisches Element 40 so angeordnet ist, dass es vom austretenden Strahl 38 erst beim Austritt aus dem Prisma 34 passiert wird. In diesen beiden Figuren wie auch in den folgenden Figg. 7 und 8 haben mit den Figg. 3 und 4 übereinstimmende Bezugszeichen dieselbe Bedeutung.

Die Figg. 7 und 8 zeigen die alternative Anordnung zu den Figg. 5 und 6: hier ist das photonische Element so angeordnet, dass der Strahl 35 beim Eintritt in das Prisma 34 das photonische Element 43 passiert und dabei gegebenenfalls moduliert wird.

Aus der Beschreibung der bevorzugten Ausführungsbeispiele sind dem Fachmann eine Vielzahl Abwandlungen zugänglich, ohne den Schutzbereich der Erfindung zu verlassen, der durch die Patentansprüche definiert wird. Denkbar sind beispielsweise sind die folgenden Abwandlungen:
- Die möglichen Anordnungen der photonischen Elemente auf den Reflexionsflächen, bez. im eintretenden- und/oder austretenden Strahl können beliebig miteinander kombiniert werden, um entweder eine zusätzliche Verstärkung der Modulationswirkung durch parallelen Betrieb zu erreichen oder bis zu fünf verschiedene Modulationen gleichzeitig auf einem Lichtstrahl aufbringen zu können.
- Die Orientierung des Tripelprismas relativ zur Lichtquelle wird durch Anordnung von photonischen Elementen auf der Stirnfläche des Tripelprismas reflektiert.
- Das Tripelprisma wird mit einem anderen Querschnitt als rund ausgeführt, insbesondere polygonal.
- Die Reflexionsflächen des Tripelprismas werden statt eben gekrümmt ausgeführt.
- Anwendungen in nicht unterbrechbaren Reflexlichtschranken durch Modulation des Lichtstrahls in den Reflektoren.
- Verwendung für Präzisionslängenmessung, Datenübertragung.

## Patentansprüche

1. Elektromagnetische Strahlung reflektierendes Element (10, 34), **dadurch gekennzeichnet, dass** das reflektierende Element ein im Strahlengang (11, 14, 18; 35, 38) und/oder an einer die Strahlung reflektierenden Fläche (30 - 32) angeordnetes photonisches Element (20, 21; 30-32; 40; 43) mit steuerbarer Bandlücke aufweist, um die das photonische Element passierende Strahlung modulieren zu können, wobei das photonische Element aus einem photonischen Material (27) in einer Flüssigkristallumgebung (28) besteht, so dass durch Beeinflussung des Flüssigkristallmaterials im nematischen und/oder ferroelektrischen Zustand durch ein elektrisches Feld die photonische Bandlücke des photonischen Materials beeinflussbar ist.

2. Strahlung reflektierendes Element (10, 34) gemäss Anspruch 1, **dadurch gekennzeichnet, dass** das photonische Element (20, 21; 30-32; 40; 43) durch elektrische Signale steuerbar ist.

3. Strahlung reflektierendes Element (10, 34) gemäss einem der Ansprüche 1 bis 2, **dadurch gekennzeichnet, dass** es sich um ein Prisma handelt und das photonische Element (20, 21; 30-32) auf mindestens einer, zur Reflexion der Strahlung ausgebildeten Prismenflächen (30 - 32) angeordnet ist.

4. Strahlung reflektierendes Element (10, 34) gemäss einem der Ansprüche 1 bis 3, **dadurch gekennzeichnet, dass** das reflektierende Element ein Prisma (10) ist und das photonische Element an der Fläche angeordnet ist, die dem Eintritt (43) und Austritt (40) des Strahls (35; 38) dient.

5. Strahlung reflektierendes Element (10, 34) gemäss Anspruch 3 oder 4, **dadurch gekennzeichnet, dass** das Prisma ein Tripelprisma (34) ist.

6. Objektidentifizierungsvorrichtung mit einem Laser bestimmter Wellenlänge zur Erzeugung eines elektromagnetischen Strahls (11, 14, 18; 35, 38) und mit mindestens einem an einem Objekt vorhandenen reflektierenden Element (10, 34) gemäss einem der Ansprüche 1 bis 4, **dadurch gekennzeichnet, dass** mindestens eines der photonischen Elemente (20, 21; 30-32) derart gewählt ist, dass durch Ansteuerung des mindestens einen photonischen Elements die Reflexionseigenschaften des Strahlung reflektierenden Elementes veränderbar sind, um den reflektierten Lichtstrahl mit Daten modulieren zu können.

7. Objektidentifizierungsvorrichtung gemäss Anspruch 6, **dadurch gekennzeichnet, dass** sämtliche photonischen Elemente (20, 21; 30-32) des reflektierenden Elementes (20, 21; 30-32; 40; 43) derart gewählt sind, dass durch Ansteuerung der photonischen Elemente die Reflexionseigenschaften des Strahlung (11, 13, 18; 35, 38) reflektierenden Elementes veränderbar sind.

8. Objektidentifizierungsvorrichtung gemäss Anspruch 6 oder 7, **dadurch gekennzeichnet, dass** die Veränderbarkeit der Reflexionseigenschaften des mindestens einen photonischen Elements (20, 21; 30-32) eine Umschaltbarkeit von hoher Reflexion auf niedere Reflexion ist.

9. Verwendung des reflektierenden Elementes (10, 34) gemäss einem der Ansprüche 1 bis 4 zum Übertragen von Daten durch Modulieren eines Strahls elektromagnetischer Strahlung (11, 13, 18; 35, 38), wobei der Strahl eine Komponente einer Wellenlänge aufweist, für die das reflektierende Element durch Beeinflussung wenigstens eines seiner photonischen Elemente (20, 21; 30-32; 40; 43) zwischen zwei Zuständen höherer und niedrigerer Transparenz und/oder Reflexion umschaltbar ist.

10. Verwendung gemäss Anspruch 9, wobei der Strahl aus Strahlung (11, 13, 18; 35, 38) der beeinflussbaren Wellenlänge besteht.

11. Objektidentifizierungsvorrichtung gemäss einem der Ansprüche 6 bis 8 oder Verwendung gemäss Anspruch 9 oder 10, **dadurch gekennzeichnet, dass** die elektromagnetische Strahlung (11, 13, 18; 35, 38) ein Lichtstrahl ist.

## Claims

1. Electromagnetic radiation reflecting element (10, 34), **characterised in that** the reflecting element comprises a photonic element (20, 21; 30-32; 40; 43) that is arranged in the beam path (11, 14, 18; 35, 38) and/or on a surface (30 - 32) reflecting the radiation and has a tunable band gap in order to be able to modulate the radiation passing through the photonic element, the photonic element consisting of a photonic material (27) in a liquid crystal environment (28) such that the photonic band gap of the photonic material can be influenced by influencing the liquid crystal material in the nematic and/or ferroelectric state by an electric field.

2. Radiation reflecting element (10, 34) according to claim 1, **characterised in that** the photonic element (20, 21; 30-32; 40; 43) is tunable by means of electric signals.

3. Radiation reflecting element (10, 34) according to one of claims 1 to 2, **characterised in that** it is a prism and the photonic element (20, 21; 30-32) is arranged on at least one of the prism surfaces (30 - 32) arranged for reflecting the radiation.

4. Radiation reflecting element (10, 34) according to one of claims 1 to 3, **characterised in that** the reflecting element is a prism (10) and the photonic element is arranged on the surface that serves for the entrance (43) and exit (40) of the beam (35; 38).

5. Radiation reflecting element (10, 34) according to claim 3 or 4, **characterised in that** the prism is a triple prism (34).

6. Object identification device comprising a laser of a determined wavelength for producing an electromagnetic beam (11, 14, 18; 35, 38) and at least one reflecting element (10, 34) according to one of claims 1 to 4 that is provided on an object, **characterised in that** at least one of the photonic elements (20, 21; 30-32) is chosen such that the reflective properties of the radiation reflecting element are variable by tuning the at least one photonic element in order to be able to modulate the reflected light beam with data.

7. Object identification device according to claim 6, **characterised in that** all photonic elements (20, 21; 30-32) of the reflecting element (20, 21; 30-32; 40; 43) are chosen such that the reflective properties of the radiation (11, 13, 18; 35, 38) reflecting element are variable by tuning the photonic elements.

8. Object identification device according to claim 6 or 7, **characterised in that** the variability of the reflective properties of the at least one photonic element (20, 21; 30-32) is an ability to switch from high reflectivity to low reflectivity.

9. Use of the reflecting element (10, 34) according to one of claims 1 to 4 for transmitting data by modulating a beam of electromagnetic radiation (11, 13, 18; 35, 38), wherein the beam comprises a component of a wavelength for which the reflecting element is switchable between two states of higher and lower transparency and/or reflexion by influencing at least one of its photonic elements (20, 21; 30-32; 40; 43).

10. Use according to claim 9, wherein the beam consists of radiation (11, 13, 18; 35, 38) of the wavelength that can be influenced.

11. Object identification device according to one of claims 6 to 8 or use according to claim 9 or 10, **characterised in that** the electromagnetic radiation (11, 13, 18; 35, 38) is a light beam.

## Revendications

1. Élément (10, 34) réflecteur du rayonnement électromagnétique, **caractérisé en ce que** l'élément réflecteur comprend un élément photonique (20, 21; 30-32; 40; 43) qui est agencé dans la trajectoire du rayon (11, 14, 18; 35, 38) et/ou sur une surface (30 - 32) réflectrice du rayonnement et qui présente une bande interdite réglable afin de pouvoir moduler le rayonnement passant par l'élément photonique, ledit élément photonique étant composé d'un matériau photonique (27) dans un environnement cristal liquide (28), de manière qu'en influençant le matériau à cristaux liquides à l'état nématique et/ou ferroélectrique par un champ électrique, la bande interdite photonique du matériau photonique peut être influencée.

2. Élément (10, 34) réflecteur du rayonnement selon la revendication 1, **caractérisé en ce que** l'élément photonique (20, 21; 30-32; 40; 43) est réglable par des signaux électriques.

3. Élément (10, 34) réflecteur du rayonnement selon l'une des revendications 1 à 2, **caractérisé en ce qu'**il s'agit d'un prisme et que l'élément photonique (20, 21; 30-32) est agencé sur au moins une des surfaces (30 - 32) du prisme arrangées pour la réflexion du rayonnement.

4. Élément (10, 34) réflecteur du rayonnement selon l'une des revendications 1 à 3, **caractérisé en ce que** l'élément réflecteur est un prisme (10) et que l'élément photonique est agencé sur la surface qui sert à l'entrée (43) et à la sortie (40) du rayon (35; 38).

5. Élément (10, 34) réflecteur du rayonnement selon la revendication 3 ou 4, **caractérisé en ce que** le prisme est un prisme triple(34).

6. Dispositif d'identification d'objets comprenant un laser d'une longueur d'onde déterminée pour produire un rayon électromagnétique (11, 14, 18; 35, 38) et au moins un élément réflecteur (10, 34) selon l'une des revendications 1 à 4 qui est agencé sur un objet, **caractérisé en ce qu'**au moins un des éléments photoniques (20, 21; 30-32) est choisi de telle manière qu'en réglant ledit au moins un élément photonique, les propriétés de réflexion de l'élément réflecteur du rayonnement sont ajustables afin de pouvoir moduler des données sur le rayon de lumière réfléchi.

7. Dispositif d'identification d'objets selon la revendication 6, **caractérisé en ce que** tous les éléments photoniques (20, 21; 30-32) de l'élément réflecteur (20, 21; 30-32; 40; 43) sont choisis de telle manière que les propriétés de réflexion du rayonnement (11, 13, 18; 35, 38) de l'élément réflecteur sont ajustables en réglant les éléments photoniques.

8. Dispositif d'identification d'objets selon la revendication 6 ou 7, **caractérisé en ce que** la ajustabilité des propriétés de réflexion dudit au moins un élément photonique (20, 21; 30-32) est une commutabilité d'une haute réflectivité à une basse réflectivité.

9. Utilisation de l'élément réflecteur (10, 34) selon l'une des revendications 1 à 4 pour transmettre des données en modulant un rayon d'un rayonnement électromagnétique (11, 13, 18; 35, 38), ledit rayon comprenant une composante d'une longueur d'onde pour laquelle ledit élément réflecteur est commutable entre deux états de transparence et/ou réflectivité plus haute et plus basse en influençant au moins un de ses éléments photoniques (20, 21; 30-32; 40; 43) .

10. Utilisation selon la revendication 9, où le rayon est composé d'un rayonnement (11, 13, 18; 35, 38) de la longueur d'onde qui peut être influencée.

11. Dispositif d'identification d'objets selon l'une des revendications 6 à 8 ou utilisation selon la revendication 9 ou 10, caractérisé(e) en ce que le rayonnement électromagnétique (11, 13, 18; 35, 38) est un rayon de lumière.
